(19) Europäisches Patentamt
European Patent Office
Office européen des brevets

(11) **EP 2 731 181 B1**

(12) **EUROPEAN PATENT SPECIFICATION**

(45) Date of publication and mention
of the grant of the patent:
**09.01.2019  Bulletin 2019/02**

(51) Int Cl.:
*H01M 4/58* *(2010.01)*          *H01M 4/38* *(2006.01)*
*H01M 10/39* *(2006.01)*          *H01M 10/05* *(2010.01)*
*H01M 4/62* *(2006.01)*          *H01M 10/0563* *(2010.01)*
*H01M 10/0569* *(2010.01)*          *H01M 4/1397* *(2010.01)*

(21) Application number: **12401224.6**

(22) Date of filing: **12.11.2012**

(54) **SECONDARY BATTERY AND METHOD FOR ITS MANUFACTURING**

SEKUNDÄRBATTERIE UND VERFAHREN ZU IHRER HERSTELLUNG

BATTERIE SECONDAIRE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.05.2014  Bulletin 2014/20**

(73) Proprietor: **Karlsruher Institut für Technologie
76131 Karlsruhe (DE)**

(72) Inventors:
• **Fichtner, Maximilian
68723 Oftersheim BRD (DE)**

• **Hahn, Horst
64342 Seeheim-Jugenheim (DE)**
• **Zhao, Xiangyu
76133 Karlsruhe (DE)**

(74) Representative: **Müller-Boré & Partner
Patentanwälte PartG mbB
Friedenheimer Brücke 21
80639 München (DE)**

(56) References cited:
**GB-A- 1 254 368      JP-A- 2003 212 541
US-A- 3 877 984      US-A- 4 546 055**

## Description

The present invention relates to a secondary battery and a method for its manufacturing.

High energy density, abundant material resources, high safety, and environmental friendliness are important features for secondary, i.e. rechargeable, batteries which are receiving particular attention in the areas of portable electronic devices, electric vehicles and other energy storage systems.

Electrochemical cells, also denoted as *batteries,* based on a cation shuttle, including $H^+/OH^-$, $Li^+$, $Na^+$, $K^+$, $Mg^{2+}$, $Al^{3+}$, and $Zn^{2+}$, have been known for a long time. A rechargeable battery which uses a fluoride anion as an anion shuttle was reported in US 7,722, 993 B2 as well as in M.A. Reddy and M. Fichtner, J. Mater. Chem., 2011, 21, 17059-17062. In the latter, the battery is operated at 150 °C by employing a solid electrolyte of a $LaF_3/BaF_2$ composite which exhibits a fluoride conductivity of 0.2 mS cm$^{-1}$ at about 150 °C. The overall reaction for the metal fluoride/metal secondary battery is expressed as

$$m\ M_C F_n\ +\ n\ M_a\ \leftrightarrow\ m\ M_C\ +\ n\ M_a F_m,\qquad (1)$$

where $M_a$ represents a first metal employed as anode, $M_C$ denotes a second metal employed as cathode, and *m, n* gives the number of respective fluoride ions.

Similar to metal fluoride/metal batteries, batteries based on various metal chloride/metal systems theoretically exhibit a large Gibbs free energy change which should yield a high electro motoric force (EMF) during the phase transition which is effected by a chloride ion transfer. Calculated data of specific capacities and energy densities for a number of metal chloride/metal couples are listed in **Table 1** and **Table 2**. There, $C_C$ and $C_a$ denote the theoretical capacities of the cathode and anode materials, respectively. The specific capacity of the battery is calculated based on both cathode and anode materials. The Gibbs free energy $\Delta_r G$ data are derived from known standard thermodynamic properties of the selected materials.

**Table 1: Specific gravimetric capacities and energy densities for metal chloride/metal couples**

| Battery reaction | $\Delta_r G$, kJ/mol | $n$ | EMF, V | Theoretical capacity $C$, mAh/g | Specific capacity of battery, Ah/kg | Energy density, Wh/kg |
|---|---|---|---|---|---|---|
| $CoCl_2$ (c) + 2Li (a) → 2LiCl + Co | -499.0 | 2 | 2.58 | $C_c$ = 412.8; $C_a$ = 3861 | 372.9 | 962.1 |
| $VCl_3$ (c) + 3Li (a) → 3LiCl + V | -642.0 | 3 | 2.21 | $C_c$ = 511.1; $C_a$ = 3861 | 451.3 | 997.3 |
| $BiCl_3$ (c) + 3Li (a) → 3LiCl + Bi | -838.2 | 3 | 2.89 | $C_c$ = 255.0; $C_a$ = 3861 | 239.2 | 691.3 |
| $2BiCl_3$ (c) + 3Mg (a) → $3MgCl_2$ + 2Bi | -1145.4 | 6 | 1.98 | $C_c$ = 255.0; $C_a$ = 2205 | 228.6 | 452.6 |
| $BiCl_3$ (c) + Ce (a) → $CeCl_3$ + Bi | -669.8 | 3 | 2.31 | $C_c$ = 255.0; $C_a$ = 573.8 | 176.5 | 407.7 |
| $CuCl_2$ (c) + Ca (a) → $CaCl_2$ + Cu | -573.1 | 2 | 2.97 | $C_c$ = 398.7; $C_a$= 1340 | 307.2 | 912.5 |
| $CuCl_2$ (c) + Mg (a) → $MgCl_2$ + Cu | -416.1 | 2 | 2.15 | $C_c$ = 398.7; $C_a$ = 2205 | 337.6 | 725.9 |
| $CuCl_2$ (c) + 2Na (a) → 2 NaCl + Cu | -592.5 | 2 | 3.07 | $C_c$ = 398.7; $C_a$ = 2330 | 297.0 | 911.9 |
| $CuCl_2$ (c) + 2Li (a) → 2LiCl + Cu | -593.1 | 2 | 3.07 | $C_c$ = 398.7; $C_a$ = 3861 | 361.3 | 1109 |
| CuCl (c) + Li (a) → LiCl + Cu | -264.5 | 1 | 2.74 | $C_c$ = 271.7; $C_a$ = 3861 | 252.9 | 693.1 |
| $FeCl_2$ (c) + 2Na (a) → 2NaCl + Fe | -465.9 | 2 | 2.41 | $C_c$ = 425.9; $C_a$ = 2330 | 311.9 | 751.6 |

(continued)

| Battery reaction | $\Delta_r G$, kJ/mol | $n$ | EMF, V | Theoretical capacity $C$, mAh/g | Specific capacity of battery, Ah/kg | Energy density, Wh/kg |
|---|---|---|---|---|---|---|
| NiCl$_2$ (c) + 2Na (a) → 2NaCl + Ni | -509.2 | 2 | 2.64 | $C_c$ = 413.5; $C_a$ = 2330 | 305.2 | 805.7 |
| FeCl$_3$ (c) + Ce (a) → CeCl$_3$ + Fe | -650.8 | 3 | 2.25 | $C_c$ = 495.6; $C_a$ = 573.8 | 265.9 | 598.2 |
| 2FeCl$_3$ (c) + 3Mg (a) → 3MgCl$_2$ + 2Fe | -1107.4 | 6 | 1.91 | $C_c$ = 495.6; $C_a$ = 2205 | 404.7 | 773.0 |
| MnCl$_2$ (c) + 2Li (a) → 2LiCl + Mn | -328.3 | 2 | 1.70 | $C_c$ = 425.9; $C_a$ = 3861 | 383.6 | 652.1 |

**Table 2: Specific volumetric capacities and energy densities for metal chloride/metal couples**

| Battery reaction | $\Delta_r G$ kJ/mol | $n$ | EMF, V | Theoretical capacity $C$, mAh/g | Specific capacity of battery, Ah/L | Volumetric energy density, Wh/L |
|---|---|---|---|---|---|---|
| CoCl$_2$ (c) + 2Li (a) → 2LiCl + Co | -499.0 | 2 | 2.58 | $C_c$ = 412.8; $C_a$ = 3861 | 827.9 | 2136.0 |
| VCl$_3$ (c) + 3Li (a) → 3LiCl + V | -642.0 | 3 | 2.21 | $C_c$ = 511.1; $C_a$ = 3861 | 891.4 | 1970.0 |
| BiCl$_3$ (c) + 3Li (a) → 3LiCl + Bi | -838.2 | 3 | 2.89 | $C_c$ = 255.0; $C_a$ = 3861 | 761.0 | 2199.3 |
| 2BiCl$_3$ (c) + 3Mg (a) → 3MgCl$_2$ + 2Bi | -1145.4 | 6 | 1.98 | $C_c$ = 255.0; $C_a$ = 2205 | 920.8 | 1823.2 |
| BiCl$_3$ (c) + Ce (a) → CeCl$_3$ + Bi | -669.8 | 3 | 2.31 | $C_c$ = 255.0; $C_a$ = 573.8 | 923.4 | 2133.1 |
| CuCl$_2$ (c) + Ca (a) → CaCl$_2$ + Cu | -573.1 | 2 | 2.97 | $C_c$ = 398.7; $C_a$= 1340 | 818.1 | 2429.8 |
| CuCl$_2$ (c) + Mg (a) → MgCl$_2$ + Cu | -416.1 | 2 | 2.15 | $C_c$ = 398.7; $C_a$ = 2205 | 998.6 | 2147.0 |
| CuCl$_2$ (c) + 2Na (a) → 2 NaCl + Cu | -592.5 | 2 | 3.07 | $C_c$ = 398.7; $C_a$ = 2330 | 614.5 | 1886.5 |
| CuCl$_2$ (c) + 2Li (a) → 2LiCl + Cu | -593.1 | 2 | 3.07 | $C_c$ = 398.7; $C_a$ = 3861 | 813.3 | 2496.8 |
| CuCl (c) + Li (a) → LiCl + Cu | -264.5 | 1 | 2.74 | $C_c$ = 271.7; $C_a$ = 3861 | 724.7 | 1985.7 |
| FeCl$_2$ (c) + 2Na (a) → 2NaCl + Fe | -465.9 | 2 | 2.41 | $C_c$ = 425.9; $C_a$ = 2330 | 611.7 | 1474.2 |
| NiCl$_2$ (c) + 2Na (a) → 2NaCl + Ni | -509.2 | 2 | 2.64 | $C_c$ = 413.5; $C_a$ = 2330 | 637.9 | 1684.0 |
| FeCl$_3$ (c) + Ce (a) → CeCl$_3$ + Fe | -650.8 | 3 | 2.25 | $C_c$ = 495.6; $C_a$ = 573.8 | 1048.7 | 2359.8 |
| 2FeCl$_3$ (c) + 3Mg (a) → 3MgCl$_2$ + 2Fe | -1107.4 | 6 | 1.91 | $C_c$ = 495.6; $C_a$ = 2205 | 1045.3 | 1996.5 |

(continued)

| Battery reaction | $\Delta_r G$ kJ/mol | $n$ | EMF, V | Theoretical capacity $C$, mAh/g | Specific capacity of battery, Ah/L | Volumetric energy density, Wh/L |
|---|---|---|---|---|---|---|
| $MnCl_2$ (c) + 2Li (a) → 2LiCl + Mn | -328.3 | 2 | 1.70 | $C_c$ = 425.9; $C_a$ = 3861 | 782.9 | 1330.9 |

From both **Table 1** and **Table 2** it is apparent that a metal chloride/metal secondary battery would exhibit high energy densities. For practical applications the volumetric energy densities given in **Table 2** are usually of higher importance compared to the gravimetric energy densities given in **Table 1** since volume is often a larger problem than weight, e.g. in cellular phones. Despite these attractive features presented in **Table 1** and **Table** 2, secondary batteries, which work on the basis of a transfer of chloride ions, have not been reported so far.

It is noteworthy to mention that a large volume change, especially for the selected cathode materials, occurs during the phase transition between a metal chloride and its corresponding metal. As an example, a drastic volume expansion of 482.3 % from Co to $CoCl_2$ was observed. Values for other couples are presented in **Table 3.**

**Table 3: Volume change between some metals and their chlorides**

| Metal/metal chloride | Volume change, % | |
|---|---|---|
| | Metal to metal chloride | Metal chloride to metal |
| Li/LiCl | 56.5 | -36.1 |
| Na/NaCl | 13.6 | -12.0 |
| $Mg/MgCl_2$ | 197.5 | -66.3 |
| $Ca/CaCl_2$ | 100.0 | -50.0 |
| $Ce/CeCl_3$ | 221.8 | -68.9 |
| Cu/CuCl | 216.2 | -68.3 |
| $Co/CoCl_2$ | 482.3 | -82.8 |
| $Cu/CuCl_2$ | 460.0 | -82.1 |
| $Fe/FeCl_2$ | 464.5 | -82.3 |
| $Ni/NiCl_2$ | 453.5 | -81.9 |
| $Mn/MnCl_2$ | 472.4 | -82.5 |
| $V/VCl_3$ | 480.0 | -82.7 |
| $Bi/BiCl_3$ | 210.6 | -67.8 |

This feature has to be considered in a real battery setup since it easily causes an interruption of a mass transfer when an electrode material is contacted with a mechanically rigid solid electrolyte.

Little attention has been paid to anionic conductors with chloride conductivity so far: I. V. Murin, O. V. Glumov, and N. A. Mel'nikova, Russ. J. Electrochem., 2009, 45, 411-416, and N. Imanaka, K. Okamoto and G. Adachi, Angew. Chem. Int. Ed., 2002, 41, 3890-3892, reported that solid inorganic compounds such as $PbCl_2$, $SnCl_2$, and LaOCl show a fast chloride transfer at very high temperatures.

Furthermore, I. V. Murin, O. V. Glumov, and N. A. Mel'nikova, Russ. J. Electrochem., 2009, 45, 411-416, and K. Yamada, Y. Kuranaga, K. Ueda, S. Goto, T. Okuda, and Y. Furukawa, Bull. Chem. Soc. Jpn., 1998, 71, 127-134, demonstrated that cubic $CsSnCl_3$ shows a high ionic conductivity of 1 mS cm$^{-1}$ at about 100 °C.

L. C. Hardy and D. F. Shriver, Macromolecules, 1984, 17, 975-977, P. C. Huang and K. H. Reichert, Angew. Makromol. Chem., 1989, 165, 1-7, as well as N. Ogata,J. Macromol. Sci. Polymer. Rev., 2002, 42, 399-439, reported that chloride ionic liquids which are cross-linked in polymers also possess fast ionic conduction. As an example, a composite of poly(diallyldimethylammonium chloride)/tetramethylammonium chloride shows an ionic conductivity of 0.22 mS cm$^{-1}$ at 25°C.

US3877984 and JP2003212541 disclose batteries which exhibit chloride ionic conductivity.

The main object of the present invention is therefore to provide a secondary battery on the basis of a metal chloride/ metal transition and a method for its manufacturing, which overcome the limitations known from the state of the art.

It is a further object of the present invention to provide a secondary battery which is safely rechargeable.

The solution of this problem is provided by a secondary battery according to claim 1 and a method for its manufacturing according to claim 13. The dependent claims describe preferred features.

According to the present invention, a metal chloride/metal secondary battery having at least the following composition is provided:

- a negative electrode *(anode)* which comprises a first metal or a first alloy or a host material, which is capable to react with or to intercalate a chloride ion Cl⁻, as anode material,
- a positive electrode *(cathode)* which comprises a chloride of a second metal or of a second alloy or a chloride intercalation compound as cathode material,
- a separator which physically separates the cathode from the anode in order to prevent any touching, and
- an electrolyte, comprising a first binary chloride ionic liquid with a cation of imidazolium, pyrrolidinium, piperidinium, pyridinium, or a quaternary ammonium, and a second ionic liquid with an anion of $BF4^-$, $PF_6^-$ or $[N(CF_3SO_2)_2]^-$ which is added as a solvent to the first binary chloride ionic liquid, which exhibits a chloride ionic conductivity, preferably of at least 0.1 mS cm⁻¹, at 298 K, more preferably of at least 1 mS cm⁻¹.

Hereby, a *chloride intercalation compound* describes a complex material where a chloride ion Cl⁻ is reversibly inserted between at least a single other chemical compound, which is generally denoted as *host material.*

In a preferred embodiment, the anode material includes

- an alkali metal, preferably Li or Na, or
- an alkaline earth metal, preferably Mg or Ca, or
- a rare earth metal, preferably La or Ce, or
- an alloy which includes at least one of these metals.

In a further preferred embodiment, finely dispersed metal powder is used as anode material in a composite with carbon black or porous nanocarbon or non-porous nanocarbon, including graphene, or other electrically conductive materials, including a metal powder or a metal foam.

In a preferred embodiment, the cathode material includes a chloride of a transition metal or a post-transition metal, preferably of Co or of V or of Bi, or of a mixture of these chlorides.

In a further preferred embodiment, the cathode material is constituted by a composite which includes carbon black or porous nanocarbon or non-porous nanocarbon, including graphene, or other electrically conductive materials, including a metal powder or a metal foam, in addition to the chloride of a transition metal or of a post transition metal. In a most preferred embodiment, a composite of $CoCl_2$ or of $VCl_3$ or of $BiCl_3$, respectively, with carbon black is employed as cathode material.

The electrolyte is defined in claim 1 and comprises a chloride ionic liquid, i.e. a chloride salt which is in the liquid state at operation temperature of the battery. In general, ionic liquids consist of a salt where one or both the ions are large, and the cation has a low degree of symmetry. These factors tend to reduce the lattice energy of the crystalline form of the salt, and hence lower the melting point.

Binary *ionic liquids* include chloride ionic liquids with cations of imidazolium, pyrrolidinium, piperidinium, pyridinium, and quaternary ammonium. Since the imidazolium species shows the lowest electrochemical window, large side chains are preferred. The *electrochemical window* of a material is the voltage range between which the material does neither become oxidized nor reduced. In a particularly preferred embodiment, ionic liquids with different anions, preferably with $BF4^-$, $PF6^-$, or $[N(CF_3SO_2)_2]^-$, are added as solvents to the selected binary ionic liquid.

In a specific embodiment, *ternary ionic liquids,* e.g. imidazolium tetrafluoroborate [BMIM][BF4], are employed as additives in order to increase the ionic conductivity of a specific binary ionic liquids electrolyte.

Another aspect of the invention concerns a method for manufacturing such a secondary battery. According to the present invention, such method comprises the following steps (a) to (d). According to step (a), an anode material having a first metal or a first alloy or a host material, which is able to react with or to intercalate a chloride ion Cl⁻, is provided and a negative electrode (anode) is formed therewith.

According to step (b), a cathode material having a chloride of a second metal or of a second alloy or a chloride intercalation compound is provided and a positive electrode (cathode) is formed therewith.

According to step (c), an arrangement is composed by arranging a separator in such a way that, while the cathode stays physically separated from the anode in order to avoid any touching between the cathode and the anode, a flow of chloride ions is generated during the operation of the secondary battery.

According to step (d), an electrolyte is added to this arrangement in such a way that, while the cathode still remains physically separated from the anode, an electrically conducting connection between the anode and the cathode results during the operation of the battery.

In a preferred embodiment, the cathode material is provided during step (b) in the form of a dried powder. The cathode is subsequently formed by ball milling this powder with carbon black or porous nanocarbon or non-porous nanocarbon, including graphene, in order to form a composite thereof.

In an alternative embodiment, the cathode material is provided during step (b) in the form of a dried powder, which is first dissolved by a suitable solvent in a solution, which is then added to carbon black or porous nanocarbon or non-porous nanocarbon, including graphene, in such a way that it delivers a wet composite. The cathode itself is formed by firstly freeze-drying the wet composite and subsequently heating it to a temperature, which is preferably between 100 °C and 200 °C.

The present invention refers to a safe and energetic rechargeable battery which is based on the transfer of chloride ions. The main advantage of such a battery is attributed to the fact that chloride ions are environmentally friendly and abundant at the same time.

The present invention will be more apparent from the following description of non-limiting specific embodiments with reference to the drawings.

High-purity (> 99.5 %) anhydrous $CoCl_2$, $VCl_3$, and $BiCl_3$ powders were dried under vacuum at appropriate temperatures. The positive electrodes (cathodes) were prepared by ball milling one of said metal chlorides and 20 wt% carbon black utilizing a silicon nitride vial with silicon nitride balls (20 and 10 mm in diameter) under an argon atmosphere. The ball to powder ratio was 20:1. The milling was performed in a planetary mill with a rotation speed of 300 rpm. The milling time was 1 h.

In an alternative route, a freeze-dry method was employed to prepare the $CoCl_2$/carbon black composite. The anhydrous $CoCl_2$ powders were dissolved in anhydrous methanol to form a blue solution which was then added drop-wise into the active carbon in a beaker. The wet composite was cooled in a liquid nitrogen bath and subsequently freeze-dried under vacuum for 5 h, followed by 18 h of drying at 160 °C.

Ionic liquids of 1-Methy-3-Octylimidazolium chloride ([OMIM] [Cl], purity > 97%) and 1-Butyl-3-methylimidazolium tetrafluoroborate ([BMIM][BF4], purity >98%) were both dried at 85 °C for 72 h under vacuum and with different volume ratios and subsequently employed as electrolyte.

A Glass fiber was utilized as separator.

The electrochemical measurements were conducted by utilizing two-electrode Swagelok-type cells with lithium metal as anode material. The cathode materials consisted of $CoCl_2$/C, $VCl_3$/C or $BiCl_3$/C powders, respectively, where C denotes carbon black. Discharge and charge tests were carried out galvanostatically at various current densities over a voltage range from 3.5 V to 1.6 V by using a multi-channel battery testing system at 298 K. Cyclic voltammetry (CV, 1.6 V to 3.5 or 4 V, 50 $\mu$V s$^{-1}$) spectra were taken by using an electrochemical workstation.

Powder X-ray diffraction (XRD) patterns were obtained with a diffractometer with Cu-K$_\alpha$ radiation. X-ray photoelectron spectroscopy (XPS) measurements were carried out by utilizing a K-Alpha spectrometer with Al-K$_\alpha$ radiation as X-ray source.

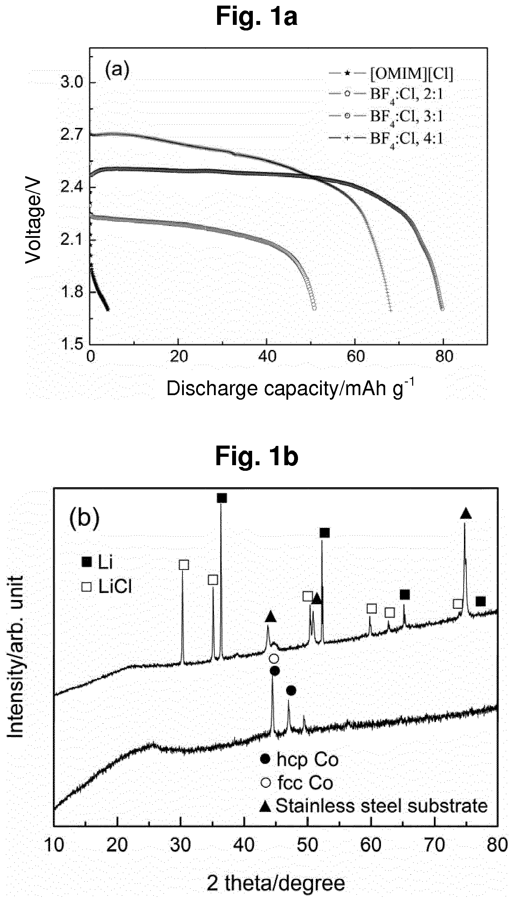

**Fig. 1** shows discharge curves as well as XRD patterns of a $CoCl_2$/Li battery with a mixture of 1-Methy-3-Octylimidazolium chloride ([OMIM] [Cl]) and 1-Butyl-3-methylimidazolium tetrafluoroborate ([BMIM][BF4]) as electrolyte. Since [OMIM] [Cl] on one hand exhibits a melting point below 0 °C, and on the other hand shows a high viscosity, a battery in which [OMIM] [Cl] is used as sole electrolyte will almost not be able to discharge as shown in **Fig. 1a.** The reason for this behaviour is found in a weak chloride mobility in pure [OMIM] [Cl] at 298 K.

By adding [BMIM][BF4] as second electrolyte component, the movement of the chloride ion could be significantly increased. Employing a volume ratio of [BMIM][BF4] to [OMIM] [Cl] at 3:1, a discharge capacity of about 80 mAh g$^{-1}$ was measured and a voltage plateau at 2.47 V for the $CoCl_2$ electrode was observed. At a molar concentration of about 1 M for [OMIM] [Cl], the ionic conductivity was 0.91 mS cm$^{-1}$ at 298 K. After the discharge a transition from $CoCl_2$ to metallic Co at the cathode as well as a LiCl formation at the anode were evidenced by the XRD patterns shown in **Fig. 1b** which indicate that the chloride ion moves from the cathode to the anode during discharging.

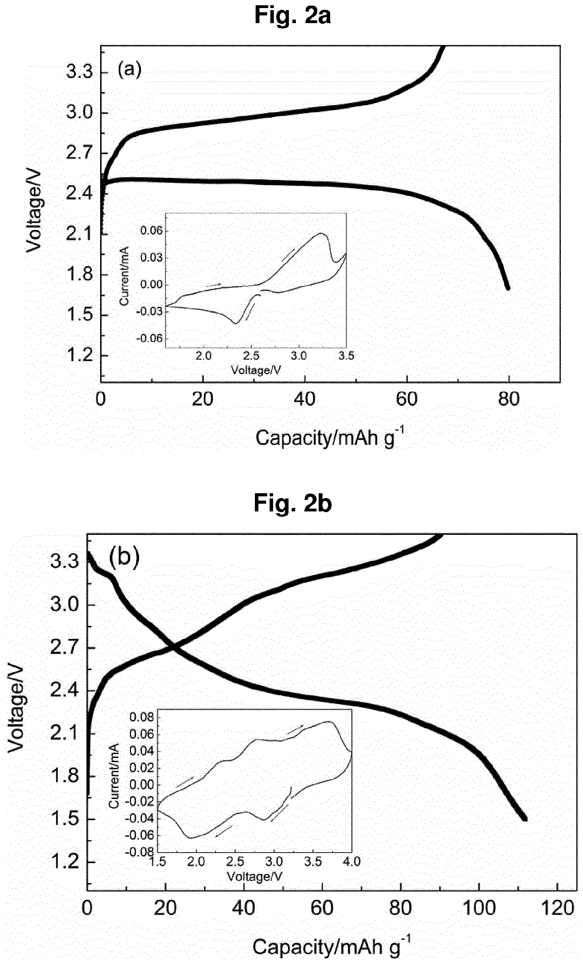

Recharging tests were performed for several couples in the electrolyte with about 1 M [OMIM] [Cl] at 298 K. The ball-milled $CoCl_2$ exhibited a charge capacity of 67.1 mAh g$^{-1}$ which is 84% of the first discharge capacity as shown in **Fig. 2a.**

In an alternative route, wet impregnation and the freeze-drying method were employed to prepare a $CoCl_2$/carbon composite, which contains finely dispersed $CoCl_2$ particles and which shows a further improvement of the capacity to 105.2 mAh g$^{-1}$.

However, this value is still considerably lower than the theoretical capacity of a $CoCl_2$ cathode with a value of 412.8 mAh g$^{-1}$ as mentioned in **Table 1.** This feature can be attributed to a partial dissolution of $CoCl_2$ into the electrolyte. It is known that transition metal chlorides are Lewis acids which react with a Lewis base containing a chloride ion, resulting in a formation of complex ions. For example, $CoCl_2$ reacts with Cl$^-$ to form a blue $CoCl_4^{2-}$ complex which readily dissolves into an electrolyte. Since this process consumes a part of the active material, it leads to a lower discharge

capacity of the CoCl$_2$ electrode.

The CV spectrum for a CoCl$_2$/Li battery as shown in the inset in **Fig. 2a** exhibits a pair of cathodic and anodic peaks in the potential electrochemical window from 3.5 V to 1.6 V, which can be attributed to the chloride shuttle during discharge and charge. The single cathodic or anodic peak is caused by a one-step phase transformation of the reduction of CoCl$_2$ and also the subsequent oxidation during charging.

Multistep reversible reactions were observed in a VCl$_3$/Li secondary battery as presented in the inset in **Fig. 2b.** The first reduction peak in the CV spectrum appears at 2.86 V and a subsequent broad reduction peak is observed in the voltage range from 2.6 V to 1.5 V while three distinct oxidation peaks appear in a reverse scan. These redox couples can be ascribed to reactions among the vanadium species of V$^{3+}$, V$^{2+}$, V$^+$ and V, which results in a discharge capacity of 111.8 mAh g$^{-1}$ of the VCl$_3$ electrode.

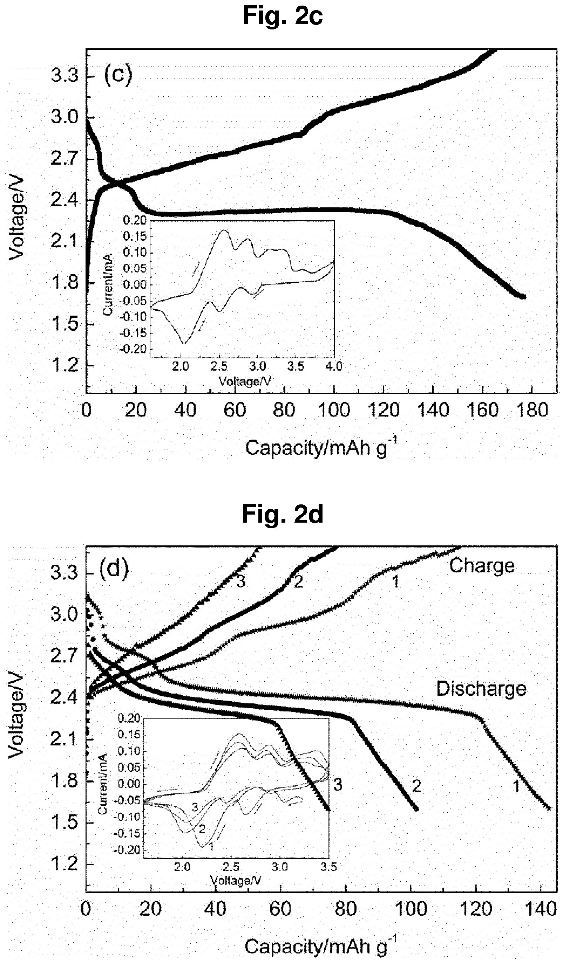

**Fig. 2c** shows a battery in which BiCl$_3$ is utilized as cathode material. BiCl$_3$ is a mild Lewis acidic chloride and therefore relatively non-toxic and has subsequently been employed as an eco-friendly catalyst system in synthetic green chemistry. In addition, it has been found that BiCl$_3$ is stable in the electrolyte even after more than 3 months of immersion. A flat voltage plateau of 2.34 V and a high discharge capacity of about 176.6 mAh g-1 were observed, which corresponds to 69% of the theoretical capacity 255 mAh g$^{-1}$ (see **Table 1**). Moreover, its charge capacity of 165 mAh g$^{-1}$ shows that 93 % of the discharge capacity could be recovered. As shown in the CV pattern in the inset in **Fig. 2c**, a BiCl$_3$/Li battery presents multistep reversible reactions during discharge and charge.

A so-called *cycling test* for the BiCl$_3$/Li battery is presented in **Fig. 2d.** The BiCl$_3$ cathode shows a discharge capacity of 142.9 mAh g$^{-1}$ at a current density of 3 mA g$^{-1}$ and its capacity decreases in the subsequent cycles. Since the phase transformation of Bi metal to BiCl$_3$ causes a large volume expansion of 210.6 %, electrical contacts between some BiCl$_3$ particles and carbon at the cathode seem to be interrupted which would result in the observed capacity decay. A similar reason is applicable to the observations at the anode.

Stable multistep reactions in the BiCl$_3$/Li battery could be observed in the CV pattern as shown in the inset in **Fig. 2d.** L. Heerman and W. D'Olieslager, J. Electrochem. Soc., 1991, 138, 1372-1376, reported that two intermediate oxidation states, i.e. Bi$_5^{3+}$ and Bi$_5^+$ clusters, in the electrochemical reduction of Bi$^{3+}$ to Bi from a room temperature molten salt exist. Here the CV spectrum shows that the major electrical charge is derived from the redox reaction at a low voltage. It is assumed that two ways of a solid phase transformation occur at the cathode, a multistep process including the mentioned intermediate oxidation states and a direct transformation between BiCl$^3$ and Bi metal.

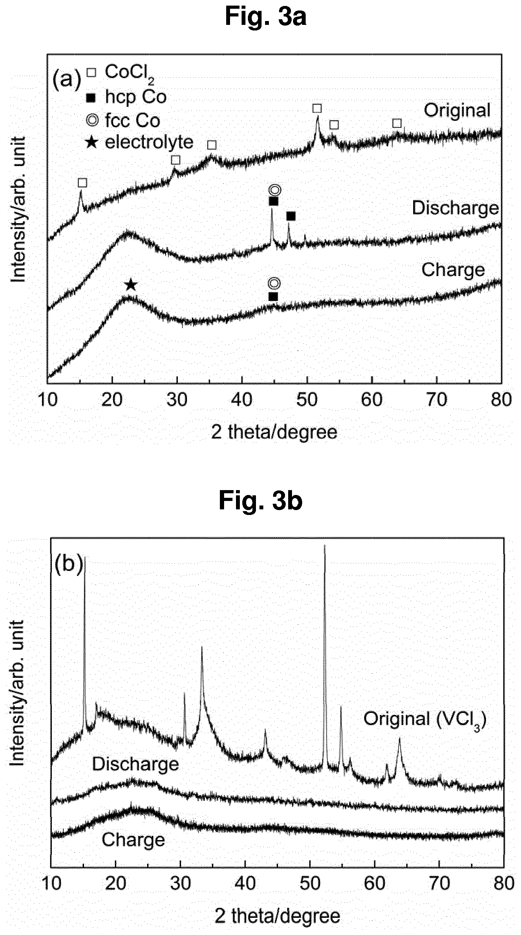

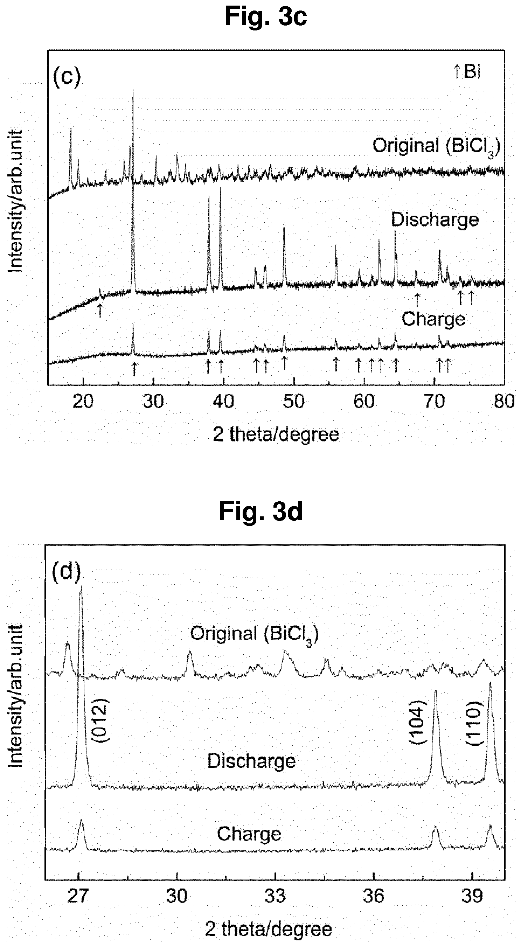

**Fig. 3** presents XRD patterns of various cathode materials after discharge and charge. For the CoCl$_2$/Li battery, Co metal is formed by a reduction of CoCl$_2$ during discharge and its diffraction peaks almost disappear during charging, which may be reflected by a combination of Co metal and a chloride ion Cl$^-$. However, no diffraction peaks corresponding to CoCl$_2$ were observed in the XRD pattern according to **Fig. 3a** which is explained by a formation of amorphous and/or nanoscale chloride particles. Similar phenomena could be observed for conversion reactions of CoCl$_2$, CoF$_2$ or CoN as electrode in lithium ion batteries. The broad diffraction peak at 22.6° in **Fig. 3a** is assigned to a reflection of the electrolyte since it is rather difficult to remove the electrolyte from the surface of an active material without dissolving the active material.

**Fig. 3b** shows XRD patterns of a VCl$_3$ cathode. Only the diffraction peak of the electrolyte appears after discharge, suggesting that V metal, which exhibits poor crystallinity being much weaker than that of Co, was formed by an electrochemical reduction of VCl$_3$. On the contrary, Bi metal, which was formed after discharging, exhibits sharp diffraction peaks as shown in **Fig. 3c**. This is explained by a phase transition from the bismuth clusters Bi$_5^{3+}$ and Bi$_5^+$ mentioned above. Similar to the charged state of the CoCl$_2$ electrode, BiCl$_3$ could also not be detected by XRD in the charged electrode. However, as presented in **Fig. 3d,** the intensity of the Bi metal peaks, especially the peak corresponding to the (012) plane, is drastically decreased and several diffraction peaks disappear in **Fig. 3c** by the reversible oxidation reaction shown in the CV patterns which again points to the formation of amorphous and/or nanoscale product phases.

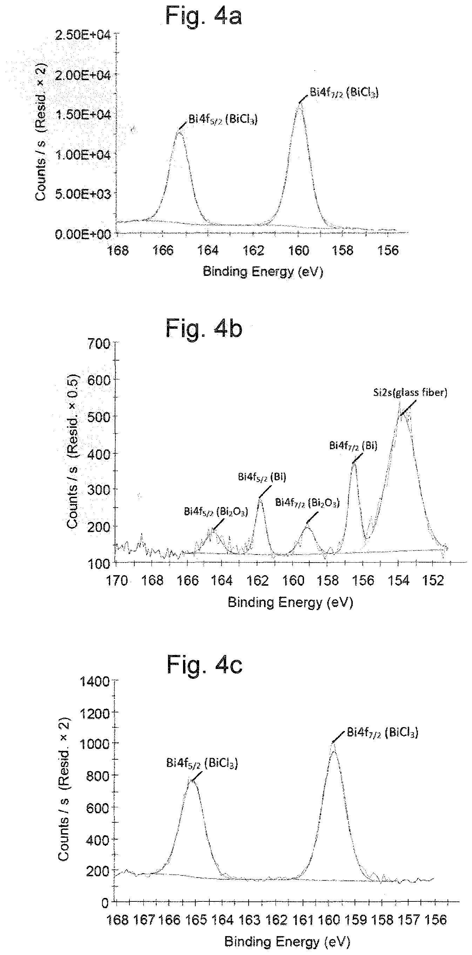

**Fig. 4** directly demonstrates the operation of a metal chloride/metal secondary battery according to the present invention.

The XPS data in **Fig. 4a** show 4f$_{7/2}$ und 4f$_{5/2}$ signals of Bi which were generated at the surface of a BiCl$_3$ cathode material.

**Fig. 4b** exhibits that metallic Bi° was formed after discharging of the BiCl$_3$ cathode material. The oxide also found here is interpreted as partial surface oxidation of Bi during the transfer of the sample from glove box to XPS chamber.

**Fig. 4c** finally demonstrates that metallic Bi°, which had been formed during the discharging, was again reversed into BiCl$_3$ after a recharging of the battery.

**Claims**

**1.** A secondary battery which comprises

- a negative electrode (anode) having a first metal or a first alloy or a host material capable of reacting with or intercalating a chloride ion as anode material,
- a positive electrode (cathode) having a chloride of a second metal or of a second alloy or a chloride intercalation compound as cathode material,
- a separator to separate the cathode from the anode, and
- an electrolyte which exhibits a chloride ionic conductivity, wherein

the chloride ionic conductivity of the electrolyte equals or exceeds a value of 0.1 mS cm$^{-1}$ at 298 K, and
the electrolyte comprises a first binary chloride ionic liquid with a cation of imidazolium, pyrrolidinium, piperidinium, pyridinium, or of a quaternary ammonium, and a second ionic liquid with an anion of $SF_4^-$, $PF_6^-$, or $[N(CF_3SO_2)_2]^-$ which is added as a solvent to the first binary chloride ionic liquid.

2. A secondary battery according to claim 1, where the anode material includes an alkaline metal or an alkaline earth metal or a rare earth metal or an alloy which includes at least one of said metals.

3. A secondary battery according to claim 1 or 2, where the anode material and/or the cathode material comprises a composite which further includes carbon black or a nanocarbon or a metal powder or a metal foam.

4. A secondary battery according to claim 3, where the cathode material includes a solid mixture of $CoCl_2$ or of $VCl_3$ or of $BiCl_3$ with carbon black.

5. A method for manufacturing a secondary battery according to one of the claims 1 to 4, with the steps:

(a) Providing an anode material having a first metal or a first alloy or a host material capable of reacting with or intercalating a chloride ion and forming a negative electrode (anode) therewith,
(b) Providing a cathode material having a chloride of a second metal or of a second alloy or a chloride intercalation compound and forming a positive electrode (cathode) therewith,
(c) Arranging a separator such that the cathode is physically separated from the anode while a flow of chloride ions is allowed during operation of said battery, and
(d) Adding an electrolyte in such a way that the cathode is electrically connected with the anode.

6. A method according to claim 5, where the cathode material is provided during step (b) in form of a dried powder and the cathode is subsequently formed by ball milling said powder with carbon black or a nanocarbon.

7. A method according to claim 5, where the cathode material is provided during step (b) in form of a dried powder, which is dissolved in a solution and is then added to carbon black or a nanocarbon, such delivering a wet composite, and the cathode is formed by freeze-drying said wet composite and subsequently heating it.

**Patentansprüche**

1. Sekundärbatterie, die umfasst

- eine negative Elektrode (Anode) mit einem ersten Metall oder einer ersten Legierung oder einem Wirtsmaterial, das/die fähig ist, mit einem Chloridion zu reagieren oder dieses zu interkalieren, als Anodenmaterial,
- eine positive Elektrode (Kathode) mit einem Chlorid eines zweiten Metalls oder einer zweiten Legierung oder einer Chloridinterkalationsverbindung als Kathodenmaterial,
- einen Separator, um die Kathode von der Anode zu trennen, und
- einen Elektrolyten, der eine Chloridionenleitfähigkeit zeigt, wobei die Chloridionenleitfähigkeit des Elektrolyten gleich einem Wert von 0,1 mS cm$^{-1}$ bei 298 K ist oder diesen überschreitet und

der Elektrolyt eine erste binäre ionische Flüssigkeit mit Chlorid mit einem Kation von Imidazolium, Pyrrolidinium, Piperidinium, Pyridinium oder von einem quaternären Ammonium und eine zweite ionische Flüssigkeit mit einem Anion von $SF_4^-$, $PF_6^-$ oder $[N(CF_3SO_2)_2]^-$, welche als ein Lösungsmittel zu der ersten binären ionischen Flüssigkeit mit Chlorid hinzugegeben wird, umfasst.

2. Sekundärbatterie nach Anspruch 1, wobei das Anodenmaterial ein Alkalimetall oder ein Erdalkalimetall oder ein Seltenerdmetall oder eine Legierung, die mindestens eines dieser Metalle einschließt, enthält.

3. Sekundärbatterie nach Anspruch 1 oder 2, wobei das Anodenmaterial und/oder das Kathodenmaterial einen Verbundstoff, der weiter Ruß oder einen Nanokohlenstoff oder ein Metallpulver oder einen Metallschaum einschließt, umfasst.

4. Sekundärbatterie nach Anspruch 3, wobei das Kathodenmaterial ein festes Gemisch von $CoCl_2$ oder von $VCl_3$ oder von $BiCl_3$ mit Ruß einschließt.

5. Verfahren zur Herstellung einer Sekundärbatterie nach einem der Ansprüche 1 bis 4 mit den Schritten:

(a) Bereitstellen eines Anodenmaterials mit einem ersten Metall oder einer ersten Legierung oder einem Wirtsmaterial, das/die fähig ist, mit einem Chloridion zu reagieren oder dieses zu interkalieren, und Bilden einer negativen Elektrode (Anode) damit,
(b) Bereitstellen eines Kathodenmaterials mit einem Chlorid eines zweiten Metalls oder einer zweiten Legierung oder einer Chloridinterkalationsverbindung und Bilden einer positiven Elektrode (Kathode) damit,
(c) Anordnen eines Separators, so dass die Kathode physisch von der Anode getrennt ist, während ein Fluss von Chloridionen während des Betriebs der Batterie zugelassen wird,
(d) Hinzufügen eines Elektrolyts derart, dass die Kathode elektrisch mit der Anode verbunden ist.

6. Verfahren nach Anspruch 5, wobei das Kathodenmaterial während Schritt (b) in Form eines getrockneten Pulvers bereitgestellt wird und die Kathode anschließend durch Kugelmahlen des Pulvers mit Ruß oder einem Nanokohlenstoff gebildet wird.

7. Verfahren nach Anspruch 5, wobei das Kathodenmaterial während Schritt (b) in Form eines getrockneten Pulvers bereitgestellt wird, das in einer Lösung gelöst wird und dann zu Ruß oder einem Nanokohlenstoff gegeben wird, so dass ein nasser Verbundstoff bereitgestellt wird und die Kathode durch Gefriertrocknen des nassen Verbundstoffs und anschließendes Erwärmen dieses gebildet wird.

**Revendications**

1. Batterie secondaire, qui comprend:

- une électrode négative (anode) présentant un premier métal ou un premier alliage ou un matériau hôte capable de réagir avec ou d'intercaler un ion chlorure comme matière d'anode,
- une électrode positive (cathode) présentant un chlorure d'un deuxième métal ou d'un deuxième alliage ou un composé intercalé de chlorure comme matière de cathode,
- un séparateur pour séparer la cathode de l'anode, et
- un électrolyte qui présente une conductivité ionique de chlorure, dans lequel la conductivité ionique du chlorure de l'électrolyte égale ou dépasse une valeur de 0,1 mS cm$^{-1}$ à 298 K, et

l'électrolyte comprend un premier liquide ionique de chlorure binaire avec un cation d'imidazolium, de pyrrolidinium, de pipéridinium, de pyridinium, ou d'un ammonium quaternaire, et un deuxième liquide ionique avec un anion de $BF_4^-$, $PF_6^-$ ou [N(CF$_3$SO$_2$)$_2$]$^-$ qui est ajouté comme solvant au premier liquide ionique de chlorure binaire.

2. Batterie secondaire selon la revendication 1, où la matière d'anode comprend un métal alcalin ou un métal alcalino-terreux ou un métal des terres rares ou un alliage qui comprend au moins un desdits métaux.

3. Batterie secondaire selon la revendication 1 ou 2, où la matière d'anode et/ou la matière de cathode comprend un composite qui comprend en outre du noir de carbone ou un nanocarbone ou une poudre de métal ou une mousse de métal.

4. Batterie secondaire selon la revendication 3, où la matière de cathode comprend un mélange solide de $CoCl_2$ ou de $VCl_3$ ou de $BiCl_3$ avec du noir de carbone.

5. Procédé de fabrication d'une batterie secondaire selon l'une des revendications 1 à 4, avec les étapes de:

(a) mettre à disposition une matière d'anode ayant un premier métal ou un premier alliage ou un matériau hôte capable de réagir avec ou d'intercaler un ion chlorure et former une électrode négative (anode) avec celle-ci,

(b) mettre à disposition une matière de cathode ayant un chlorure d'un deuxième métal ou d'un deuxième alliage ou un composé intercalé de chlorure et former une électrode positive (cathode) avec celle-ci,

(c) Agencer un séparateur de telle sorte que la cathode est physiquement séparée de l'anode tandis qu'un flux d'ions chlorure est autorisé pendant le fonctionnement de ladite batterie, et

(d) ajouter un électrolyte de telle sorte que la cathode est électriquement connectée à l'anode.

6. Procédé selon la revendication 5, où la matière de cathode est mise à disposition pendant l'étape (b) sous forme d'une poudre sèche et la cathode est ensuite formée par broyage à boulets de ladite poudre avec du noir de carbone ou un nanocarbone.

7. Procédé selon la revendication 5, où la matière de cathode est mise à disposition pendant l'étape (b) sous forme de poudre sèche, laquelle est dissoute dans une solution et est ensuite ajoutée au noir de carbone ou un nanocarbone, fournissant ainsi un composite humide, et la cathode est formée par lyophilisation dudit composite humide et chauffage consécutif de celui-ci.

## Fig. 1a

## Fig. 1b

## Fig. 2a

## Fig. 2b

## Fig. 2c

## Fig. 2d

# Fig. 3a

# Fig. 3b

# Fig. 3c

# Fig. 3d

## Fig. 4a

## Fig. 4b

## Fig. 4c

**EP 2 731 181 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7722993 B2
- US 3877984 A
- JP 2003212541 B

**Non-patent literature cited in the description**

- **M.A. REDDY ; M. FICHTNER.** *J. Mater. Chem.,* 2011, vol. 21, 17059-17062
- **I. V. MURIN ; O. V. GLUMOV ; N. A. MEL'NIKOVA ; RUSS. J.** *Electrochem,* 2009, vol. 45, 411-416
- **N. IMANAKA ; K. OKAMOTO ; G. ADACHI.** *Angew. Chem. Int. Ed.,* 2002, vol. 41, 3890-3892
- **K. YAMADA ; Y. KURANAGA ; K. UEDA ; S. GOTO ; T. OKUDA ; Y. FURUKAWA.** *Bull. Chem. Soc. Jpn.,* 1998, vol. 71, 127-134
- **L. C. HARDY ; D. F. SHRIVER.** *Macromolecules,* 1984, vol. 17, 975-977
- **P. C. HUANG ; K. H. REICHERT.** *Angew. Makromol. Chem.,* 1989, vol. 165, 1-7
- **N. OGATA.** *J. Macromol. Sci. Polymer. Rev.,* 2002, vol. 42, 399-439
- **L. HEERMAN ; W. D'OLIESLAGER.** *J. Electrochem. Soc.,* 1991, vol. 138, 1372-1376